# EUROPÄISCHE PATENTSCHRIFT

(11) **EP 1 189 400 B1**
(45) Veröffentlichungstag und Bekanntmachung des Hinweises auf die Patenterteilung: **09.04.2008**
(21) Anmeldenummer: 01118211.0
(22) Anmeldetag: 28.07.2001
(51) Int. Cl.: H04L 25/03

(54) **Vorverzerrung bei Datenübertragung**
Predistortion for data transmission
Prédistorsion pour la transmission de données

(30) Priorität: 16.09.2000 DE 10045981
(43) Veröffentlichungstag der Anmeldung: 20.03.2002
(73) Patentinhaber: PHOENIX CONTACT GmbH & Co. Kg, 32825 Blomberg (DE)
(72) Erfinder: Balkau, Karl-Heinz, 32825 Blomberg (DE); Kuschke, Detlev, 32816 Schieder-Schwalenberg (DE)
(74) Vertreter: Blumbach - Zinngrebe

(56) Entgegenhaltungen:
- EP-A- 0 242 166

## Beschreibung

Die Erfindung betrifft ein Verfahren zum Kompensieren von Übertragungseinflüssen auf vorbestimmten Daten zugeordnete Signale sowie eine Vorrichtung zur Durchführung des Verfahrens.

Bei der Nachrichtenübertragung werden die abstrakten Daten vorgegebenen physikalischen Größen, wie beispielsweise einem elektrischen Strom oder einer elektrischen Spannung aufgeprägt. Diese physikalischen Signale sind aufgrund verschiedenster Ursachen bei der Übertragung bestimmten Verzerrungen unterworfen, welche eine Zuordnung zu den entsprechenden Daten zumindest erschwert oder gar unmöglich macht. Deshalb besteht nach einer Datenübertragung in einem Übertragungssystem, insbesondere einer Übertragungsstrecke, am Empfänger häufig das Problem, aus den empfangenen Signalen in eindeutiger Weise die zugeordneten Daten zu ermitteln. Im Falle von optischen Übertragungssystemen kann für die Verzerrung beispielsweise die Dispersion oder eine optische Nichtlinearität des Übertragungsmediums verantwortlich sein.

Bei elektrischen Übertragungsstrecken kann die Zahl von derartige Verzerrungen hervorrufenden Störquellen noch größer sein. Beispielsweise kann bei Datenübertragungen, bei welchen die Leitungskodierung nicht gleichstromfrei ist, eine in der Regel vorhandene Leitungskapazität die Übertragungsgeschwindigkeit, insbesondere bei großen

Übertragungsdistanzen, stark beschränken. Wird beispielsweise die Leitungskapazität durch ein über mehrere Taktzyklen konstantes Signalmuster aufgeladen, kann sich ein nachfolgendes, unterschiedliches Signal verkürzen, da die Leitungskapazität umgeladen werden muss. Im Signalempfänger besteht dann das schon beschriebene Problem, die verzerrten Signale den entsprechenden Daten zuzuordnen. Wenn benachbarte Signale nicht mehr voneinander getrennt werden können, spricht man von Nachbarimpulsnebensprechen (ISI: inter symbol interference).

Nach dem Stand der Technik werden am Ende einer Übertragungsstrecke, d.h. am Empfänger, Maßnahmen zur Beseitigung der durch das Übertragungsmedium eingebrachten Symbolinterferenzen ergriffen, siehe beispielsweise K.D. Kammeyer, "Nachrichtenübertragung", B.G. Teubner, Stuttgart, 1996, Seiten 181 ff. Zur Verwendung kommen beispielsweise rekursive oder nicht rekursive Entzerrer, die mit einem erheblichen Aufwand betrieben werden müssen.

In dem Dokument EP 0 242 166 A2 ist eine digitale Signalübertragungsvorrichtung zum Übertragen digitaler Signale über ein Übertragungssystem beschrieben, welches Elemente enthält, die nichtlineare Verzerrungen erzeugen können. Dabei wird das Übertragungssystem einem linearen System angenähert, indem zu dem übertragenden Signal eine Kompensationsverzerrung addiert wird, welche gemäß der Amplitudenzeit ("run-length") des digitalen Signals geformt wird und die in dem Übertragungssystem zu erzeugende Verzerrung aufhebt. Es dient der Kompensation von beispielsweise in Aufnahme- und Wiedergabeleitungen erzeugten "Betriebsvorzerrungen". Die Daten zur Kompensationsverzerrung sind in einer Vielzahl von "Datenkarten" gespeichert. In der Kompensationsverzerrung kann eine Amplitudensteuerung auch zusammen mit einer Phasenverschiebung angewendet werden.

Der Erfindung liegt somit die Aufgabe zugrunde, bei Datenübertragungen auftretende Signalverzerrungen so zu kompensieren, dass in der Regel aufwendige Entzerrerschaltungen am Empfänger entfallen können.

Dieses Problem löst die Erfindung auf überraschend einfache Weise durch ein Verfahren zum Kompensieren von Übertragungseinflüssen auf über ein Übertragungssystem zu übertragende, vorbestimmten Daten zugeordnete Signale mit den Merkmalen des Anspruchs 1 bzw. eine Vorrichtung zur Durchführung des Verfahrens mit den Merkmalen des Anspruchs

4.

Danach wird eine Vorverzerrung der Signale, beispielsweise am Ort des Transceivers oder im Protokollbaustein durchgeführt, wobei diese Vorverzerrung unter Ansprechen auf eine Datenverarbeitung, insbesondere eine digitale Datenverarbeitung eingestellt wird. Statt mit aufwendigen Mitteln die Übertragungseinflüsse auf die Signale am Empfänger wieder rückgängig zu machen, werden erfindungsgemäß die zu übertragenden Signale so vorverzerrt, dass diese nach der Übertragung am Empfänger quasi unverzerrt oder nur leicht verzerrt ankommen, wodurch eine aufwendige Signal- bzw. Datenwiederherstellung im Allgemeinen entfallen kann.

Vorteilhafte Ausführungsformen sind in den Unteransprüchen angegeben.

Das Prinzip der Erfindung kann auf beliebige Übertragungssysteme, beispielsweise mit einem elektrischen oder einem optischen Medium angewendet werden.

Um eine hohe Flexibilität zur Anpassung des erfindungsgemäßen Verfahrens an die spezifischen Übertragungseigenschaften des Übertragungssystems bereitzustellen, kann vorgesehen sein, dass die Datenverarbeitung eine Anwendung von Verzerrungsregeln auf die vorbestimmten Daten in Abhängigkeit von Daten, welche den vorbestimmten Daten vorhergingen, umfasst. Damit lassen sich z.B. die spezifischen Einflüsse der Signalen, welche den vorhergehenden Daten zugeordnet sind, auf das Übertragungsmedium berücksichtigen und die Signale, welche den nachfolgenden Daten zugeordnet sind, entsprechend anpassen. Dies bedeutet, dass eine Anpassung des erfindungsgemäßen Verfahrens auf das spezifische Übertragungssystem leicht mittels Einstellen der dem Übertragungssystem zugeordneten Verzerrungsregeln durchgeführt werden kann. Die Verzerrungsregeln können in der beschriebenen Weise vorbestimmt sein oder in einer besonders vorteilhaften Ausführungsform adaptiv, beispielsweise durch Testübertragungen ermittelt und eingestellt werden.

Die Anzahl der den vorbestimmten Daten vorhergehenden Daten, welche bei der Datenverarbeitung berücksichtigt werden, kann je nach Übertragungstrecke ausgewählt werden.

Um bei einem elektrischen Übertragungsmedium die Parallelimpedanz der Leitung zu berücksichtigen, kann vorgesehen sein, dass die Vorverzerrung der den vorbestimmten Daten zugeordneten Signalen eine zeitliche Verlängerung und/oder Verkürzung der betreffenden Signale umfasst. Hierdurch können insbesondere Zeiträume, welche zur Umladung der Kapazität notwendig sind, berücksichtigt werden, so dass beispielsweise am Empfänger einer Übertragungsstrecke ein Signal verlängert anliegt, um eine eindeutige Zuordnung zu einem Datum zu erhalten.

Um zu verhindern, dass die beschriebene Verlängerung und/oder Verkürzung der Signale einen zu großen Einfluss auf das Protokoll der Datenübertragung hat, kann vorgesehen sein, dass sich innerhalb einer vorgegebenen Anzahl von Signalen die zeitlichen Verkürzungen und Verlängerungen der Signale gerade aufheben, so dass die Länge des Zeitrahmens für die vorgegebene Anzahl von Signalen zeitlich konstant ist. Beispielsweise kann damit erreicht werden, dass trotz Anwendung des erfindungsgemäßen Verfahrens die Länge eines Datentelegramms protokollkonform konstant ist.

Zur Kompensation von Übertragungseinflüssen kann auch vorgesehen sein, dass die Vorverzerrung eine Signalüberhöhung und/oder eine Signalerniedrigung umfasst. Beispielsweise kann im Ansprechen auf die Datenverarbeitung je nach spezifischer Übertragungsart ein Spannungswert oder ein Stromwert verändert werden. Besonders vorteilhaft ist es, wenn zusätzlich zur Veränderung der Amplitude der physikalischen Größe die Zeitdauer der Signalüberhöhung und/oder der Signalerniedrigung im Ansprechen auf die Datenverarbeitung eingestellt wird, da mit einer Vielzahl von einstellbaren Parametern die Kompensation optimiert werden kann.

Die erfindungsgemäße Vorverzerrung ist an das Übertragungssystem besonders gut angepasst, wenn die Vorverzerrungsregeln in Abhängigkeit des spezifischen Übertragungssystems, beispielsweise in Abhängigkeit der Länge und/oder der Art einer Übertragungsstrecke festgelegt werden.

Eine besonders effiziente Vorverzerrung ist bei einem Verfahren realisiert, bei welchem die den vorgegebenen Daten zugeordneten Signale jeweils aus einer vorgegebenen Anzahl von zeitlich aufeinanderfolgenden Teilsignalen synthetisiert werden, wobei jedes Teilsignal unter Ansprechen auf die Datenverarbeitung vorverzerrt wird. Ein derartiges Verfahren ermöglicht sowohl die Verlängerung bzw. Verkürzung eines Signals als auch eine Signalerhöhung oder -erniedrigung.

Das erfindungsgemäß Verfahren kann die Verwendung eines Programms, insbesondere für die Datenverarbeitung und/oder für die Ermittlung der Vorverzerrung der Signale umfassen, es ist jedoch auch möglich, dass die entsprechenden Programmschritte festverdrahtet in einer anwenderspezifischen integrierten Schaltung (ASIC) abgelegt sind. Sind die Verzerrungsregeln veränderbar, beispielsweise dadurch, dass sie in einem EPROM abgespeichert sind, müssen zum Zeitpunkt des Leiterplattendesigns keine Informationen über das Übertragungssystem wie die Leitungsqualität oder die gewählte Baudrate vorliegen, da die zugeordneten Verzerrungsregeln nachträglich abgelegt bzw. bei einer Veränderung des Übertragungssystems angepasst werden können. Die Vorverzerrung kann dabei in einer Protokolleinrichtung und/oder im Transceiver eines Übertragungssystems durchgeführt werden, wobei entweder vorgegebene Signale verzerrt oder direkt verzerrte Signale erzeugt werden.

Das erfindungsgemäße Verfahren lässt sich in einer Vielzahl von Vorrichtungen durchführen, wobei im Wesentlichen eine Speichereinrichtung zum Speichern von den vorbestimmten Daten vorhergehenden Daten, eine Einrichtung zum Speichern von Verzerrungsregeln, eine Einrichtung zum Ermitteln der Vorverzerrung und eine Verzerrungseinrichtung umfassen, in welcher den vorbestimmten Daten zugeordnete, vorverzerrte Signale erzeugbar sind.

Die Erfindung wird im Folgenden durch das Beschreiben einiger Ausführungsformen unter Bezugnahme auf die Zeichnungen erläutert, wobei
- Fig. 1: in einer Prinzipskizze eine Vorrichtung zur Durchführung des erfindungsgemäßen Verfahrens,
- Fig. 2: in einer Prinzipskizze eine weitere Vorrichtung zur Durchführung des erfindungsgemäßen Verfahrens und
- Fig. 3: zwei beispielhafte Signalvorverzerrungen für eine vorgegebene Datenfolge
zeigt.

Das erfindungsgemäße Verfahren zum Kompensieren von Übertragungseinflüssen auf vorbestimmten Daten zugeordnete Signale wird im Folgenden beispielhaft auf die geschilderte Problematik der Parallelimpedanz eines RS422/485-Medium angewendet. Bei dieser seriellen Übertragung wird eine NRZ(non return to zero)-Bit-Kodierung verwendet, die nicht gleichstromfrei ist und häufig schon bei Frequenzen im Megahertz-Bereich zu Nachbarimpulsnebensprechen führt, da der durch die Leitungskapazität hervorgerufene Ladevorgang beim Datenwechsel bzw. Signalwechsel das zugeordnete Signal erheblich verkürzen kann.

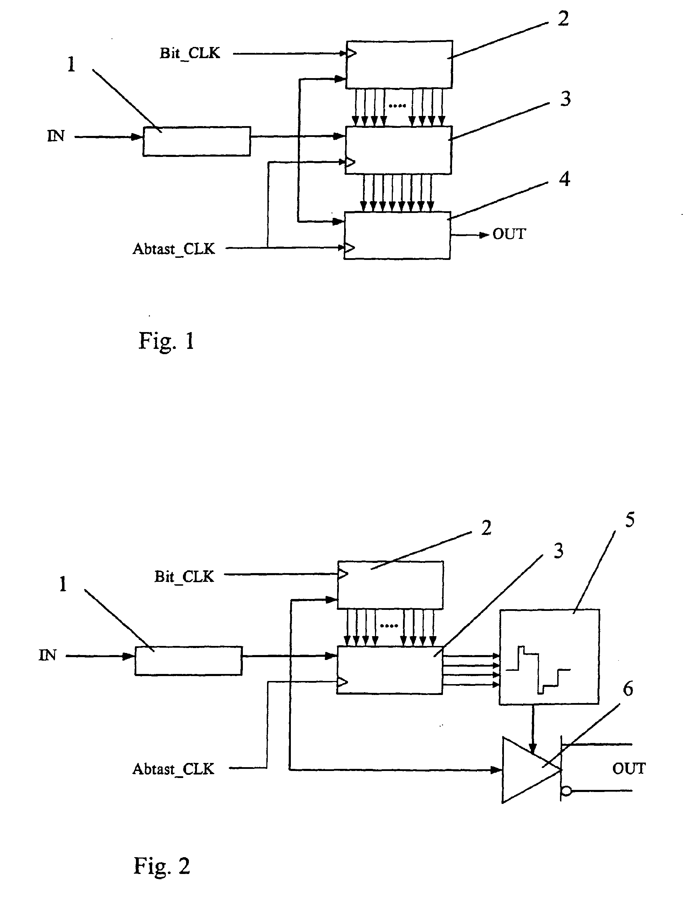

Die in Fig. 1 schematisch dargestellte Vorrichtung dient zur Ausführung eines ersten erfindungsgemäßen Verfahrens zum Kompensieren von Übertragungseinflüssen auf die den vorbestimmten Daten zugeordneten Signale. Dabei ist ein Datenregister 1 an eine Speichereinrichtung 2, eine Einrichtung 3 zum Ermitteln der Vorverzerrung, die auch eine nicht dargestellte Einrichtung zum Ablegen von Verzerrungsregeln umfasst und an eine Einrichtung 4, in welcher den vorbestimmten Daten zugeordnete vorverzerrte Signale erzeugbar sind, angeschlossen. Die über ein nicht dargestelltes Übertragungssystem zu übertragenden Daten IN treten in das Datenregister 1 ein und werden von diesem an die Einrichtungen 2, 3 und 4 weitergegeben. Im beschriebenen Beispiel beträgt die Bittaktrate Bit_CLK im Megahertzbereich, beispielsweise bei 16 Megahertz, mit der die Daten jeweils in Form eines n-Bit-Wortes in den Speicher 2 und die Einrichtungen 3 und 4 eingeführt werden. Zum Einspeisen eines n-Bit-Wortes werden entsprechend n Taktzyklen benötigt. Zum Einspeisen eines 8-Bit-Wortes werden entsprechend 8 Taktzyklen benötigt. Während die Eingangsregister der Einrichtungen 3 und 4 eine Größe von n bzw. vorzugsweise 8 Bit aufweisen, umfasst die Speichereinrichtung 2 je nach Ausführungsform der Erfindung ein FIFO-Register mit einer Tiefe von mehreren Bits, beispielsweise von 16 bis 32 Bit, im vorliegenden Fall 16 Bit. Demnach ist in der Speichereinrichtung 2 neben dem aktuellen Datenwort auch das dem aktuellen Datenwort vorhergehende Datenwort abgelegt, welches vor dem aktuellen Datenwort übertragen wurde. Das aktuelle Datenwort wird der Einrichtung 3 zum Ermitteln der Vorverzerrung übergeben. In der Einrichtung 3 wird eine digitale Datenverarbeitung durchgeführt, bei welcher die in der Einrichtung abgelegten Verzerrungsregeln auf die aktuellen Daten angewendet werden, wobei die vorhergehenden Daten mit in die Datenverarbeitung eingehen. Hierzu umfasst die digitale Datenverarbeitungseinrichtung 3 ein EPROM, in welchem die Verzerrungsregeln für die vorgegebene RS 422/485-Übertragungstrecke vorgegeben sind. Das Ergebnis der Datenverarbeitung in Abhängigkeit der Verzerrungsregeln, der vorbestimmten Daten und der vorherigen Daten wird an die Verzerrungseinrichtung 4 weitergegeben, in welcher den vorbestimmten Daten zugeordnete vorverzerrte Signale erzeugt werden. Einrichtung 4 arbeitet als Bit-Synthesizer, in welchem jedes einzelne Bitsignale aus einer Anzahl von zeitlich aufeinanderfolgenden Teilbitsignalen synthetisiert wird, wobei jedes Teilbitsignal unter Ansprechen auf die Datenverarbeitung vorverzerrt wird. Hierzu liegt an den Einrichtungen 3 und 4 ein Abtast-Taktsignal Abtast_CLK an, das mit 128 Megahertz um den ganzzahligen Faktor x, beispielsweise X = 8, höher im Vergleich zur Bit-Taktrate liegt. Jedes einzelne Bit kann in der Verzerrungseinrichtung 4 aus x, beispielsweise x= 8, einzelnen Teilsignalen synthetisiert und getrennt vorverzerrt werden. Zur Erzeugung der jedem einzelnen Bit zugeordnete Verzerrungsinformation wird die Datenverarbeitung in der Einrichtung 3 zum Ermitteln der Vorverzerrung mit der genannten Taktrate, welche der x-fachen Bitrate entspricht, beispielsweise mit einer Bitrate von 128 Megahertz durchgeführt. Die den vorbestimmten Daten zugeordneten verzerrten Signale OUT werden dann von der Verzerrungseinrichtung 4, d.h. dem Bit-Synthesizer an einen nicht dargestellten Transceiver weitergegeben, der die Signale an eine RS 422/485-Übertragungsleitung anlegt.

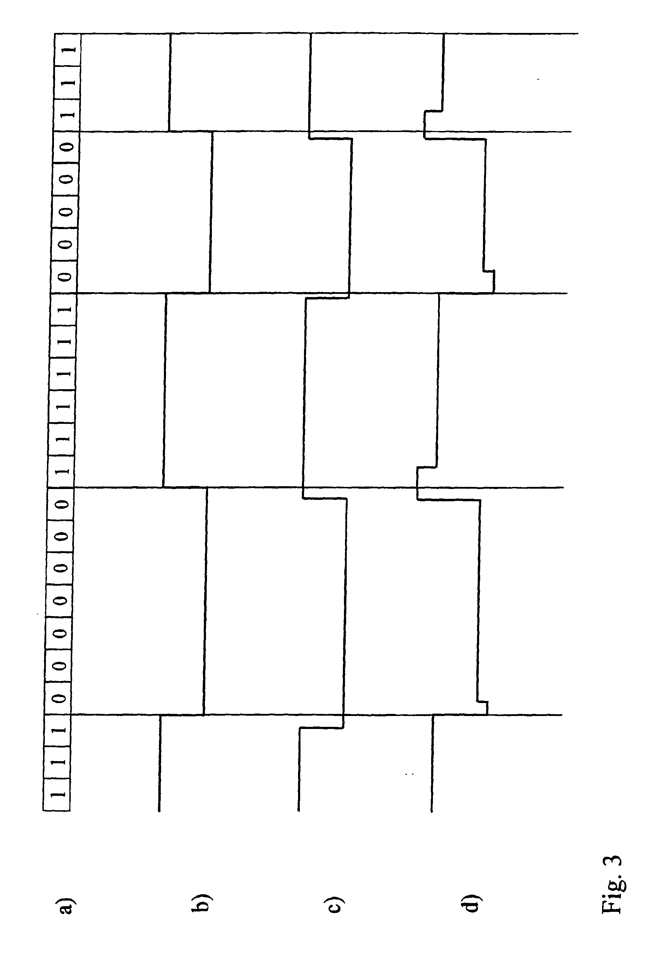

Fig. 3a zeigt eine beispielhafte Bitfolge, deren zugeordnete Signale erfindungsgemäß zum Kompensieren von Übertragungseinflüssen auf der RS 422/485-Leitung vorverzerrt werden. Fig. 3b stellt das zugeordnete Signal im NRZ-Leitungscode dar. Die nicht gleichstromfreie Kodierung kann die schon beschriebene Verlängerung/Verzögerung von Signalen zur Folge haben. Die erfindungsgemäß vorverzerrte Signalfolge, welche mit der in Fig.1 dargestellten Vorrichtung erzeugt wurde, zeigt Fig. 3c. Um zu verhindern, dass das Auf- bzw. Entladen der Leitungskapazität ein Signal zu stark verkürzt, so dass es am Komparator des Empfängers nicht mehr erkannt werden kann, werden bei einem Signalwechsel vorhergehende Signale verkürzt bzw. das erste Bit, welches für den Signalwechsel verantwortlich ist, in Abhängigkeit der Verzerrungsregeln, der aktuellen Daten und der diesen aktuellen Daten vorhergehenden Daten verlängert. Somit ist die Verlängerung oder Verkürzung der Signale nicht bei jedem Signalwechsel gleich, sondern kann an die gegebenen Umstände durch Umstellung der Datenverarbeitung flexibel und optimal eingestellt werden. Bei der RS422/485-Übertragung werden die Daten in einem Datentelegramm zusammengefasst. Damit das Protokoll durch das erfindungsgemäße Verfahren nicht wesentlich verändert wird, heben sich innerhalb eines Datentelegramms die zeitlichen Verlängerung und Verkürzungen der Signale gerade auf, so dass der Zeitrahmen für ein Telegramm unabhängig von der erfindungsgemäßen Vorverzerrung unverändert bleibt.

In einer Ausführungsform der Erfindung wird der Einrichtung 4 der einkommende Datenstrom nicht übermittelt, sondern aufgrund der berechneten Informationen aus der Einrichtung 3 die vorverzerrten Datensignale direkt erzeugt.

Fig. 2 zeigt eine Vorrichtung zur Ausführung eines weiteren erfindungsgemäßen Verfahrens zum Kompensieren von Übertragungseinflüssen. Im Unterschied zum ersten Verfahren wird durch die Einrichtung 3 zum Ermitteln der Vorverzerrung ein Controller 5 angesteuert, welcher den vom Datenregister 1 zum Transceiver 6 geführten Datenstrom in Form von zugeordneten Signalen bezüglich der Amplitude manipuliert. Im Ansprechen auf die Datenverarbeitung wird eine Signalerhöhung bzw. eine Signalerniedrigung durchgeführt. Aufgrund der Überhöhung kann die Leitungskapazität schneller umgeladen und somit die ansonsten auftretende Signalverzögerung verhindert werden.

Eine besonders hohe Flexibilität des erfindungsgemäßen Verfahrens an individuelle Eigenschaften von Übertragungsstrecken wird erreicht, wenn sowohl die Signalamplitude als auch die Signaldauer verändert werden kann. Für die in Fig. 3a dargestellte Bitfolge ist in Fig. 3d eine zugeordnete, beispielhaft vorverzerrte Signalfolge angegeben, bei welcher sowohl die Signallängen als auch die Signalamplituden im Ansprechen auf die Datenverarbeitung variiert werden, um Übertragungseinflüsse auf die Signale vorzukompensieren.

## Patentansprüche

1. Verfahren zum Kompensieren von Übertragungseinflüssen auf über ein Übertragungssystem mit einem elektrischen oder einem optischen Medium zu übertragende, vorbestimmten Daten zugeordnete Signale durch eine Vorverzerrung der Signale, wobei die Einstellung der Vorverzerrung unter Ansprechen auf eine Datenverarbeitungseinrichtung oder ein digitales Steuerwerk durchgeführt wird, wobei
die Datenverarbeitung eine Anwendung von Verzerrungsregeln auf die den vorbestimmten Daten zugeordneten Signale in Abhängigkeit von den den vorbestimmten Daten vorhergehenden Daten umfasst, wobei Verzerrungsregeln vorbestimmt sind und/oder adaptiv ermittelt werden, und wobei
die Vorverzerrung eine zeitliche Verlängerung oder Verkürzung der Signale und eine Signalüberhöhung und/oder eine Signalerniedrigung umfasst, wobei die Zeitdauer der Signalüberhöhung und/oder der Signalerniedrigung unter Ansprechen auf die Datenverarbeitung eingestellt wird, und wobei
die den vorbestimmten Daten zugeordneten Signale jeweils aus einer vorgegebenen Anzahl von zeitlich aufeinanderfolgenden Teilsignale synthetisiert werden, wobei jedes Teilsignal unter Ansprechen auf die Datenverarbeitung vorverzerrt wird.

2. Verfahren nach Anspruch 1,
**dadurch gekennzeichnet, dass** sich die zeitliche Verlängerung und Verkürzung der Signale innerhalb einer vorgegebenen Anzahl von vorgegebenen Daten zugeordneten Signalen aufheben, so dass die Länge des Zeitrahmens für die vorgegebene Anzahl von Signalen zeitlich konstant ist.

3. Verfahren nach einem der Ansprüche 1 oder 2,
**dadurch gekennzeichnet, dass** die Vorverzerrung in zumindest einer Protokolleinrichtung und/oder zumindest in einem Transceiver des Übertragungssystems durchgeführt wird.

4. Vorrichtung zum Ausführen eines Verfahrens zur Kompensation von Übertragungseinflüssen auf zu übermittelnde, vorbestimmten Daten zugeordnete Signale, zum Ausführen eines Verfahrens nach einem der Ansprüche 1 bis 3, umfassend:
- eine Speichereinrichtung (2) zum Speichern von den vorbestimmten Daten vorhergehenden Daten;
- eine Speichereinrichtung (3) zum Ablegen von Verzerrungsregeln, nach denen die den vorbestimmten Daten zugeordneten Signale vorverzerrbar sind;
- eine Verzerrungseinrichtung (4, 6), in welcher den vorbestimmten Daten zugeordnete, vorverzerrte Signale erzeugbar sind;
- eine Einrichtung (3, 5) zum Ermitteln der Vorverzerrung der den vorbestimmten Daten zugeordneten Signale unter Ansprechen auf eine Datenverarbeitungseinrichtung (3) oder ein digitales Steuerwerk (3), wobei
die vorhergehenden Daten mit in die Datenverarbeitung eingehen, und wobei die Verzerrungseinrichtung (4, 6) im Ansprechen auf die Datenverarbeitung zur Erzeugung von den vorgegebenen Daten zugeordneten Signalen ausgebildet ist, welche verlängert und/oder verkürzt und überhöht und/oder erniedrigt sind, und wobei
die Verzerrungseinrichtung (4, 6) zum Synthetisieren der den vorbestimmten Daten zugeordneten Signale jeweils aus einer vorgegebenen Anzahl von zeitlich aufeinanderfolgenden Teilsignalen und die Einrichtung (3, 5) zum Ermitteln der Vorverzerrung zur Festlegung der Vorverzerrung der einzelnen Teilsignale ausgebildet ist.

## Claims

1. Method of compensating for transmission influences on signals, which are to be transmitted via a transmission system with an electrical or an optical medium and are allocated to predetermined data, by predistortion of the signals, wherein the predistortion is set in response to a data processing device or a digital control system, wherein the data processing comprises an application of distortion rules to the signals allocated to the predetermined data in dependence upon the data preceding the predetermined data, wherein distortion rules are predetermined and/or are determined adaptively, and wherein the predistortion includes an extension or a shortening of the signals in terms of time and includes a signal enhancement and/or a signal diminution, wherein the duration of the signal enhancement and/or of the signal diminution is set in response to the data processing, and wherein the signals allocated to the predetermined data are each synthesised from a preset number of chronologically successive partial signals, wherein each partial signal is predistorted in response to the data processing.

2. Method as claimed in claim 1, **characterised in that** the extension and shortening of the signals in terms of time cancel each other out within a preset number of signals allocated to preset data so that the length of the time frame for the preset number of signals is constant in terms of time.

3. Method as claimed in any one of claims 1 or 2, **characterised in that** the predistortion is carried out in at least one protocol device and/or at least in a transceiver of the transmission system.

4. Device for carrying out a method of compensating for transmission influences on signals, which are to be transmitted and which are allocated to predetermined data, in order to carry out a method as claimed in any one of claims 1 to 3, comprising:
- a storage device (2) for storing data preceding the predetermined data;
- a storage device (3) for storing distortion rules according to which the signals allocated to the predetermined data can be predistorted;
- a distortion device (4, 6) in which predistorted signals allocated to the predetermined data can be produced;
- a device (3, 5) for determining the predistortion of the signals allocated to the predetermined data in response to a data processing device (3) or a digital control system (3), wherein the preceding data are included in the data processing, and wherein the distortion device (4, 6) is formed in response to the data processing to produce signals allocated to the preset data, which signals are extended and/or shortened and enhanced and/or diminished, and wherein the distortion device (4, 6) is formed to synthesise the signals allocated to the predetermined data in each case from a preset number of chronologically successive partial signals, and the device (3, 5) for determining the predistortion is formed to establish the predistortion of the individual partial signals.

## Revendications

1. Procédé pour la compensation d'influences de transmission sur des signaux, qui sont associés à des données prédéterminées et qui sont à transmettre par l'intermédiaire d'un système de transmission avec un moyen électrique ou un moyen optique, par une prédistorsion des signaux,
dans lequel le réglage de la prédistorsion est effectué en agissant sur un dispositif de traitement de données ou sur une unité de commande numérique, le traitement de données comprenant une application de règles de distorsion sur les signaux associés aux données prédéterminées en fonction des données précédant les données prédéterminées, des règles de distorsion étant prédéterminées et/ou étant déterminées de façon adaptative, et dans lequel la prédistorsion comprend un allongement ou un raccourcissement temporel des signaux et une augmentation et/ou une diminution des signaux, la durée de l'augmentation de signaux et/ou de la diminution de signaux étant réglée en agissant sur le traitement de données, et les signaux associés aux données prédéterminées étant synthétisés à chaque fois à partir d'un nombre prédéterminé dé signaux partiels qui se succèdent dans le temps, chaque signal partiel étant soumis à une prédistorsion en agissant sur le traitement de données.

2. Procédé selon la revendication 1,
**caractérisé par le fait que** l'allongement et le raccourcissement temporels des signaux s'annulent à l'intérieur d'un nombre prédéterminé de signaux associés à des données prédéterminées de telle sorte que la longueur de la trame temporelle pour le nombre prédéterminé de signaux est constante dans le temps.

3. Procédé selon l'une des revendications 1 ou 2,
**caractérisé par le fait que** la prédistorsion est effectuée dans au moins un dispositif de protocole et/ou au moins dans un émetteur - récepteur du système de transmission.

4. Dispositif pour l'exécution d'un procédé pour la compensation d'influences de transmission sur des signaux à transmettre associés à des données prédéterminées, pour l'exécution d'un procédé selon l'une des revendications 1 à 3, comprenant :
- un dispositif de mémorisation (2) pour mémoriser les données précédant les données prédéterminées ;
- un dispositif de mémorisation (3) pour enregistrer des règles de distorsion selon lesquelles les signaux associés aux données prédéterminées peuvent être soumis à une prédistorsion ;
- un dispositif de distorsion (4, 6) dans lequel des signaux associés aux données prédéterminées et soumis à une prédistorsion peuvent être produits ;
- un dispositif (3, 5) pour la détermination de la prédistorsion des signaux associés aux données prédéterminées en agissant sur un dispositif de traitement de données (3) ou sur une unité de commande numérique (3), les données précédentes entrant aussi dans le traitement de données, et le dispositif de distorsion (4, 6) étant conçu pour produire des signaux associés aux données prédéterminées en agissant sur le traitement de données, lesquels signaux sont allongés et/ou raccourcis et augmentés et/ou diminués, et le dispositif de distorsion (4, 6) étant conçu pour synthétiser les signaux associés aux données prédéterminées à chaque fois à partir d'un nombre prédéterminé de signaux partiels qui se succèdent dans le temps et le dispositif (3, 5) pour la détermination de la prédistorsion étant conçu pour la spécification de la prédistorsion des signaux partiels individuels.
